# EUROPÄISCHE PATENTSCHRIFT

(11) **EP 3 797 338 B1**
(45) Veröffentlichungstag und Bekanntmachung des Hinweises auf die Patenterteilung: **23.11.2022**
(21) Anmeldenummer: 19778841.7
(22) Anmeldetag: 16.09.2019
(51) Int. Cl.: G05B 19/4155, G06F 21/10

(54) **VERFAHREN ZUR VERWALTUNG EINES PRODUKTIONSPROZESSES, SOWIE COMPUTERPROGRAMM ZUM AUSFÜHREN DES VERFAHRENS UND ELEKTRONISCH LESBARER DATENTRÄGER**
METHOD FOR MANAGING A PRODUCTION PROCESS, AND COMPUTER PROGRAM FOR CARRYING OUT THE METHOD AND ELECTRONICALLY READABLE DATA CARRIER
PROCÉDÉ DE GESTION D'UN PROCESSUS DE PRODUCTION AINSI QUE PROGRAMME INFORMATIQUE DESTINÉ À LA MISE EN UVRE DU PROCÉDÉ ET SUPPORT DE DONNÉES LISIBLE PAR VOIE ÉLECTRONIQUE

(30) Priorität: 17.09.2018 EP 18194820
(43) Veröffentlichungstag der Anmeldung: 31.03.2021
(73) Patentinhaber: Siemens Aktiengesellschaft, 80333 München (DE)
(72) Erfinder: BISCHOFF, Martin, 85653 Aying, Großhelfendorf (DE); DOLANSKY, Stefan, 90518 Altdorf (DE); MAYER, Hermann Georg, 83209 Prien am Chiemsee (DE); MOSE, Christian, 81476 München (DE)
(86) Internationale Anmeldenummer: PCT/EP2019/074611
(87) Internationale Veröffentlichungsnummer: WO 2020/058151

(56) Entgegenhaltungen:
- EP-A1- 3 226 165
- US-A1- 2009 164 039
- US-A1- 2015 134 955
- US-B1- 7 314 169

## Beschreibung

Die Erfindung betrifft ein Verfahren zur Verwaltung eines Produktionsprozesses zur Herstellung wenigstens eines Bauelements. Ferner betrifft die Erfindung ein Computerprogramm, welches direkt in einen Speicher einer elektronischen Recheneinrichtung ladbar ist, mit Programmmitteln, um die Schritte des Verfahrens zur Verwaltung des Produktionsprozesses auszuführen. Darüber hinaus betrifft die Erfindung einen elektronisch lesbaren Datenträger mit darauf gespeicherten elektronisch lesbaren Steuerinformationen.

Moderne Fertigungsprozesse beziehungsweise Produktionsprozesse sind weitestgehend automatisiert und digitalisiert. Sie bestehen aus einer Sequenz beziehungsweise Abfolge von Fertigungs- beziehungsweise Produktionsschritten. Dabei wird der jeweilige Produktionsschritt in der Regel mit spezialisierten, jedoch generisch einsetzbaren Produktionsmaschinen durchgeführt. Das heißt, die jeweilige Produktionsmaschine ist quasi derart ausgebildet, dass sie sich für die Herstellung einer Vielfallt von unterschiedlichen Bauelementen eignet, ohne dass beispielsweise spezielle auf ein Bauelement abgestimmte Werkzeuge benutzt werden müssen. Dazu eigenen sich additive beziehungsweise subtraktive Fertigungsverfahren beziehungsweise Fertigungsprozesse, wie beispielsweise einen 3D-Druck, Fräsen, Stanzen, oder Schleifen. Somit eignet sich solch eine Produktionsmaschine zur beliebigen Vervielfältigung eines beliebigen Bauelements. Dies ist nicht immer wünschenswert, da so beispielsweise eine Bauelementqualität aufgrund beliebiger unautorisierter Vervielfältigung beispielsweise für einen Benutzer des Bauelements schwer überprüfbar ist.

Für einen Entwickler beziehungsweise Designer eines Produkts beziehungsweise des Bauelements kann es, insbesondere aufgrund der Digitalisierung, eine große Herausforderung sein, die Herstellungsanleitungen des Produkts beziehungsweise des Bauelements gegen beliebige Vervielfältigung zu schützen und gleichzeitig eine einfache Übergabe der Herstellungsanleitungen an beispielsweise einen Bauelementhersteller zu ermöglichen. Im Gegensatz zu dem genannten Produktdesigner möchte ein Produktionsmaschinenhersteller, dessen Produktionsmaschine geeignet ist, das Bauelement zu erzeugen, möglichst viele Daten beispielsweise über den Einsatz und Gebrauch seiner Produktionsmaschine wissen, um diese beispielsweise verbessern zu können.

Dahingegen ist es eine Herausforderung für den Bauelementhersteller eine stabile, nachhaltige Produktionsüberwachung, - kontrolle, -verwaltung und/oder -steuerung für die von ihm bei der Produktion des Bauelements verwendeten Produktionsmaschinen beziehungsweise verwendeten Herstellungsprozesse zu etablieren. Der Benutzer des produzierten Bauelements könnte wiederum daran gelegen sein, die Originalität des Bauelements feststellen zu können, um beispielsweise Gewährleistungs-und/oder Garantieansprüche geltend machen zu können. Darüber hinaus ist durch die Originalität beispielsweise auch eine Qualität des Bauelements abschätzbar. Es zeigt sich, dass ein vollständiger Produktionsprozess, also vom Produktdesign bis zum fertigen Produkt beziehungsweise Bauelements, schwer erfassbar und noch schwerer überwachbar und verwaltbar ist.

Die EP 3 226 165 A1 zeigt Systeme, Methoden, Vorrichtungen und andere Techniken zur Verwendung von verteilten Registern, wie beispielsweise eine Blockchain-Datenbank, um die sichere Verteilung und Verwendung von 3D-Modelldateien an 3D-Drucker über ein Computernetzwerk zu ermöglichen.

Ferner zeigt die US 2009/0164039 A1 ein Verfahren zum sicheren Steuern eines Roboter-Betriebssystems, wobei ein Empfangen einer Berechtigung erfolgt, die mit einer Anweisung verbunden ist, roboterbasierte Betriebsaufgaben in Bezug auf ein oder mehrere Objekte auszuführen. Ferner erfolgt ein Überprüfen der mit der Anweisung verbundenen Berechtigung und ein Steuern des Betriebs des Roboter-Betriebssystems durch Steuern einer Vielzahl von Roboterelementen, welche eine oder mehrere Funktionen gemäß der Berechtigung ausführen.

Schließlich zeigt die US 2015/0134955 A1 ein Verfahren zur Kommunikation von Hardware-Entwürfen und zugehöriger Software, wobei eine Software zum Steuern eines 3D-Druckers und der 3D-Drucker bereitgestellt werden und eine Authentifizierung wenigstens eines Benutzers, eines Geschäfts, wenigstens eines 3D-Druckers sowie eine Verschlüsselung von Hardwaremodellen vom Benutzer bis zum Geschäft und vom Geschäft bis zu einem oder mehreren 3D-Druckern erfolgen.

Aufgabe der vorliegenden Erfindung ist es, ein Verfahren, ein Computerprogramm und einen elektronisch lesbaren Datenträger bereitzustellen, durch welche eine Verwaltung eines Produktionsprozesses zur Herstellung wenigstens eines Bauelements besonders vorteilhaft durchführbar ist.

Diese Aufgabe wird durch die Gegenstände der unabhängigen Patentansprüche gelöst.

Das erfindungsgemäße Verfahren dient zur Verwaltung eines Produktionsprozesses zur Herstellung wenigstens eines Bauelements, insbesondere zumindest teilweise durch wenigstens eine Produktionsmaschine. Um die Verwaltung des Produktionsprozesses besonders vorteilhaft durchführen zu können, umfasst das erfindungsgemäße Verfahren mehrere Schritte.

In einem ersten Schritt erfolgt ein, insbesondere verschlüsseltes, Speichern von Herstellungsdaten, auf deren Basis das Bauelement durch den Produktionsprozess herstellbar ist, wie beispielsweise zumindest ein Teil einer Bauanleitung, in einem ersten Dateicontainer. Zum Speichern beziehungsweise für die Speicherung empfängt beispielsweise eine erste elektronische Recheneinrichtung die Herstellungsdaten und schreibt sie in einen Speicherbereich beispielsweise einer Speichereinrichtung. Es können die Herstellungsdaten beispielsweise durch die elektronische Recheneinrichtung in der Speichereinrichtung abgelegt werden. Dabei kann die Recheneinrichtung beispielsweise erste Daten empfangen, aus denen die Herstellungsdaten resultieren beziehungsweise gebildet werden können. Dies bedeutet, dass die ersten Daten die Herstellungsdaten sein können oder die Herstellungsdaten aus den, insbesondere empfangenen, ersten Daten erzeugt beziehungsweise erstellt werden können. Der Dateicontainer kann als virtueller Dateicontainer beispielsweise als Speicherbereich auf einer Speichereinrichtung interpretiert werden, innerhalb welcher beispielsweise die Herstellungsdaten abgelegt werden können, wobei die Herstellungsdaten selbst unterschiedlichste Daten beziehungsweise Dateiformate oder Informationen enthalten können, wie beispielsweise technische Zeichnungen und/oder CAD-Modelle.

In einem zweiten Schritt des Verfahrens erfolgt ein, insbesondere verschlüsseltes, Speichern von sich auf das Bauelement beziehenden Reproduktionsdaten in dem ersten Dateicontainer, wobei die Reproduktionsdaten wenigstens eine sich auf das Herstellen des Bauelements beziehende Erlaubnis charakterisieren. Dazu kann die Recheneinrichtung zweite Daten empfangen, aus denen die Reproduktionsdaten resultieren können. Dies bedeutet, dass die zweiten Daten die Reproduktionsdaten sind oder die Reproduktionsdaten können aus den zweiten Daten erstellt beziehungsweise erzeugt werden. Die Reproduktionsdaten umfassen insbesondere beispielsweise Lizenzbestimmungen beziehungsweise eine Lizenz, welche beispielsweise besagt was mit den Herstellungsdaten erlaubt ist beziehungsweise wie diese verwendet werden können beziehungsweise dürfen. So können die Reproduktionsdaten beispielsweise beinhalten wer, wie oft und beispielsweise mit welcher Präzision, wo das Bauelement, insbesondere durch die Produktionsmaschine, erzeugen darf. Ferner können die Reproduktionsdaten beispielsweise auch eine zeitliche Beschränkung der Lizenz umfassen und/oder es kann in den Reproduktionsdaten beispielsweise vermerkt sein, dass eine Erlaubnis für die Verwendung der Herstellungsdaten generell oder eben beschränkt erteilt wird.

In einem dritten Schritt des Verfahrens erfolgt ein, insbesondere verschlüsseltes, Speichern von Produktionsdaten, welche wenigstens einen Zustand der wenigstens einen Produktionsmaschine während des Produktionsprozesses charakterisieren, in einem zweiten Dateicontainer. Der zweite Dateicontainer ist insbesondere analog des ersten Dateicontainers ausgebildet und kann beispielsweise auf der ersten Speichereinrichtung der elektronischen Recheneinrichtung oder aber auch beziehungsweise zusätzlich auf einer weiteren Speichereinrichtung einer weiteren Recheneinrichtung gespeichert beziehungsweise abgelegt sein. Dabei empfängt die Recheneinrichtung oder die weitere Recheneinrichtung beispielsweise dritte Daten, aus denen die Produktionsdaten resultieren beziehungsweise abgeleitet beziehungsweise erzeugt werden können. Dies bedeutet, analog zu den ersten und den zweiten Daten, dass die dritten Daten die Produktionsdaten sein können oder die Produktionsdaten aus den dritten Daten erzeugt beziehungsweise erstellt werden können. Dabei können die Produktionsdaten beispielsweise Daten über den Einsatz und den Gebrauch, aufgetretenen Probleme, Wartungsmaßnahmen und Betriebszustände der Produktionsmaschine beinhalten. Die Produktionsdaten können insbesondere während des Betriebs der Produktionsmaschine generiert und gespeichert werden.

In einem vierten Schritt des Verfahrens werden Charakterdaten, welche wenigstens eine Eigenschaft des durch den Produktionsprozess hergestellten Bauelements charakterisieren, in einem dritten Dateicontainer, insbesondere verschlüsselt, gespeichert. Dazu empfängt die Recheneinrichtung oder eine weitere Recheneinrichtung beispielsweise vierte Daten, aus denen die Charakterdaten resultieren beziehungsweise abgeleitet werden können. Dies bedeutet analog zu den ersten Daten, dass die vierten Daten die Charakterdaten sein können oder die Charakterdaten aus den vierten Daten erzeugt beziehungsweise erstellt werden können. Dabei kann das Speichern wiederum insbesondere in der Speichereinrichtung oder einer weiteren Speichereinrichtung erfolgen, welche insbesondere beispielsweise einer der Recheneinrichtungen zugeordnet sein kann. Der Dateicontainer kann insbesondere wieder anlog zu dem ersten beziehungsweise zweiten Dateicontainer aufgebaut sein. Die Charakterdaten beschreiben dabei charakteristische Merkmale des Bauelements, wie beispielsweise den zur Herstellung des Bauelements zugrundeliegenden Produktionsprozess und/oder typische Herstellerangeben, insbesondere eines Bauelementfertiger, oder dergleichen.

Erfindungsgemäß wird eine Anfrage, beispielsweise eines Nutzers, welcher insbesondere ein Produktdesigner, ein Produktionsmaschinenhersteller, der Bauelementfertiger und/oder ein Anwender beziehungsweise Benutzer des Bauelements sein kann, empfangen. Weiter wird zumindest ein Teil der gespeicherten Herstellungsdaten und/oder Reproduktionsdaten und/oder Produktionsdaten und/oder Charakterdaten in Abhängigkeit von der Anfrage, insbesondere entschlüsselt, bereitgestellt. Dabei ist beispielsweise die erste Recheneinrichtung für die Verwaltung und Freigabe der Anfragen zuständig und beispielsweise als Zentrale, mit der wenigstens einen am Verfahren beteiligten Produktionsmaschine verbunden beziehungsweise vernetzt, sodass die Recheneinrichtung die Lizensierungen der Reproduktionsdaten verwaltet kann und beispielsweise der Produktionsmaschine das Herstellen des Bauelements erlauben kann. Erfindungsgemäß wird den Herstellungsdaten ein vorgebbarer Detailgrad, ein so genanntes "level of detail", zugeordnet. Dieser Detailgrad charakterisiert eine Genauigkeit, mit welcher die Herstellungsdaten bereitzustellen sind. So können beispielsweise für die Produktion beziehungsweise den Herstellungsprozess unterschiedliche Detailgrade vorteilhaft sein, welche jeweils in den Herstellungsdaten beschrieben sind. Manchmal beispielsweise um das Bauelement für Demonstrationszwecke zu präsentieren, reicht die Herstellung desselbigen in reduzierter Auflösung beziehungsweise mit reduzierten Details, was beispielsweise für einen Prototyp, insbesondere zu Demonstrationszwecken, Produktionskosten spart.

Erfindungsgemäß werden die Herstellungsdaten auf Basis des Detailgrads in Abhängigkeit von der Anfrage bereitgestellt. Mit anderen Worten ist der dem Akteur, welcher die Anfrage gestellt hat, angezeigte Detailgrad abhängig von der Lizenz beziehungsweise der Zugangsbeschränkung, welche beispielsweise in den Reproduktionsdaten für diesen Akteur abgelegt ist. Wird für die Herstellung eines Bauelements eine andere Auflösung verwendet, kann es ähnlich einer Demosoftware als Demonstrationsobjekt verwendet werden, sodass beispielsweise ein Benutzer zuhause unabhängig von seiner Lizenz, welcher beispielsweise eine geeignet Produktionsmaschine in Form eines 3D-Druckers sein Eigen nennt, das Teil in einer einfachen Auflösung herstellen kann, um es beispielsweise auszuprobieren. Wird eine bessere Auflösung benötigt, wird beispielsweise über eine zentrale Recheneinrichtung beispielsweise die erste Recheneinrichtung aufgrund der Zugangsbeschränkung beziehungsweise der Autorisierung ein entsprechender Detailgrad beispielsweise für den Hersteller des Bauelements freigegeben. Ist das Bauelement beispielsweise von einem weitere, unterschiedlich ausgeformten Bauelement abhängig, dessen Daten ebenso in den Herstellungsdaten hinterlegt sind, sollen diese aber nicht preisgegeben werden, kann beispielsweise eine Schnittstelle des Bauelements zum anderen in voller Auflösung freigegeben werden, sodass das herzustellende Bauelement einwandfrei und an die Schnittstelle passend herstellbar ist. Dabei ist insbesondere die jeweilige Produktionsmaschine mit der zentralen Recheneinrichtung vernetzt, welche die Lizensierungen der Reproduktionsdaten verwaltet.

In einem weiteren Schritt des Verfahrens wird zumindest ein Teil des Bauelements durch additive und/oder subtraktive Fertigung, insbesondere durch eine jeweilige Produktionsmaschine, beziehungsweise die wenigstens eine Produktionsmaschine, gefertigt.

Durch das vorgestellte, erfindungsgemäße Verfahren werden besonders vorteilhaft Daten erhoben beziehungsweise festgehalten, durch welche in besonders vorteilhafter Weise eine, insbesondere aktive, Überwachung beziehungsweise Verwaltung des Produktionsprozesses für die Herstellung des wenigstens einen Bauelements möglich ist. In den erfindungsgemäßen Dateicontainern des Verfahrens sind sämtliche relevante Daten, insbesondere die Herstellungsdaten, Reproduktionsdaten, Charakterdaten und Produktionsdaten, welche für den Produktionsprozess nötig sind beziehungsweise dabei anfallen und/oder diesen charakterisieren abgelegt. Die jeweilige Daten, also die Herstellungsdaten, Reproduktionsdaten, Produktionsdaten und Charakterdaten werden während des Produktionsprozesses, bei einer jeweiligen Änderungen beziehungsweise bei ihrem Entstehen, insbesondere mit dem jeweiligen Dateicontainer synchronisiert und können darüber hinaus kontinuierlich aktualisiert werden. Ziel und Funktion des erfindungsgemäßen Verfahrens sind insbesondere, den Design- und Produktionsprozess aktiv zu steuern, zu kontrollieren beziehungsweise zu verwalten, also beispielsweise bestimmte Produktionsschritte mittels Lizenzen zu erlauben oder zu verbieten, Designs freizugeben, Lizenzen zu erwerben und/oder Wartungs- und Servicemaßnehmen anzustoßen.

Dabei sind die Produktionsdaten, insbesondere beispielsweise Daten, welche durch die Produktionsmaschine erzeugt beziehungsweise bereitgestellt werden und beispielsweise aktuelle oder vergangene Konfigurationsdaten, Wartungsmaßnahmen, durchgeführte Produktionsprozesse, aufgetretene Warnungen oder Fehler der Produktionsmaschine beinhalten, durch welche insbesondere auf einen während der Produktion des Bauelements vorherrschenden wenigstens einen Zustand der Produktionsmaschine geschlossen werden kann. Die Charakterdaten charakterisieren insbesondere das Bauelement und beinhalten somit beispielsweise eine Zeit beziehungsweise Dauer der durchgeführten Fertigungsschritte, verwendete Produktionsmaschinen oder verwendete Fertigungslizenzen, welche beispielsweise den Produktionsprozess allgemein oder insbesondere den Produktionsprozess des jeweiligen Bauelements charakterisieren und darüber hinaus Herstellerinformationen als einen Datensatz und das Produktionsdatum oder die Lizenz enthalten können.

Der Erfindung liegt die Erkenntnis zugrunde, dass in der Regel bisher nur jeweils einzelne Aspekte eines Produktionsprozesse, in insbesondere nicht-kompatiblen Datenmanagementsystemen festgehalten sind. So verwendet beispielsweise jeder an dem Produktionsprozess beteiligte Akteur, wie der genannte Produktdesigner, Produktionsmaschinenhersteller oder Bauelementfertiger sowie letztendlich der Benutzer des Bauelements in der Regel, falls überhaupt, ein eigenes System, um die für ihn relevanten Daten festzuhalten. Dabei beinhalten die jeweiligen Daten eines jeweiligen Akteurs oft vertrauliche und auch für andere Akteure irrelevante Daten, daher ist ein für alle Akteure frei einsehbares Datenmanagementsystem ebenfalls nicht sinnvoll. Somit wird eine, insbesondere aktive, Verwaltung des Produktionsprozesses besonders erschwert beziehungsweise insgesamt nicht möglich.

Ein Vorteil des erfindungsgemäßen Verfahrens ist, dass die Herstellungsdaten an die Reproduktionsdaten angebunden beziehungsweise gemeinsam mit diesen abgelegt sind, wobei letztere beispielsweise eine zeitliche Beschränkung für die Verwendung der ersteren darstellen können. Darüber hinaus besteht beispielsweise durch zeitliche Beschränkung die Möglichkeit, dass die Herstellungsdaten ablaufen können. Dies ist bei einer weiteren Herstellung des Bauelements somit leicht erkennbar und eröffnet dem Produktdesigner beispielsweise die Möglichkeit, zumindest eine Teil der Herstellungsdaten, insbesondere beispielsweise Design- oder Bauanleitungen zu aktualisieren, um insbesondere eine Verbesserung des Bauelements besonders einfach realisieren zu können, sodass diese Änderungen besonders zeitnah in den weiteren Produktionsprozess übernommen werden können.

Darüber hinaus ist es durch die durch das Verfahren erhobenen Daten, insbesondere durch die Produktionsdaten beispielsweise für den Produktionsmaschinenhersteller möglich, durch Auswertung der Produktionsdaten Wartungsmaßnahmen für die Produktionsmaschine zu planen oder diese beispielsweise durch zukünftige Entwicklungen zu verbessern. Daher stellen insbesondere die Produktionsdaten, aber auch die Charakterdaten eine wichtige Grundlage für Wartungsmaßnahmen und präventive Instandhaltungsmaßnahmen, dem so genannten "preventive" beziehungsweise "predictive maintenance" dar.

Da jeweilige Daten, also die Herstellungsdaten die Reproduktionsdaten, die Produktionsdaten und die Charakterdaten jeweils insbesondere einen Personenkreis beziehungsweise einem Akteur wie beispielsweise dem Produktdesigner, dem Produktionsmaschinenhersteller, aber auch einem Bauelementfertiger beziehungsweise dem Anwender nützen, ist ein Zugriff darauf von Vorteil. Jedoch können jeweilige Daten sensible beziehungsweise vertrauliche Informationen enthalten, welche jeweils nur für einen der Akteure bestimmt sind und beispielsweise von den anderen Akteuren verborgen bleiben sollten. Beispielsweise durch die Verwendung der unterschiedlichen Dateicontainer, welche jeweils eine Art der Daten, also Herstellungsdaten, Produktionsdaten und Charakterdaten enthalten, kann eine Zugriffsverwaltung beziehungsweise Rechteverwaltung umsetzbar sein. Die Reproduktionsdaten nehmen eine gewisse Sonderstellung ein, da sie den genannten Zugriff beziehungsweise die Zugriffsberechtigung, beispielsweise in Form einer für einen jeweiligen Akteur gespeicherten Lizenz, regeln können.

Mit anderen Worten nochmals zusammengefasst werden durch das erfindungsgemäße Verfahren für die Verwaltung eines Produktionsprozesses Daten verwaltet, welche Komponentendesigns, deren Fertigungs- beziehungsweise Herstellungsprozesse, sowie deren Lizensierungsmöglichkeiten beinhalten können. Darüber hinaus kann durch die Daten ein Logbuch der Produktionsmaschine sowie deren Standard-Betriebszeiten und durchgeführte Fertigungsprozesse, produzierte Komponenten beziehungsweise Bauelemente und die dafür verwendeten Lizenzen sowie durchgeführte Wartungs- und Reparaturmaßnahmen erfasst werden. Ferner können bei der Verwaltung Daten des produzierten Bauelements wie der zugrunde liegende Fertigungsprozess, der entsprechende Hersteller beziehungsweise Lizenznehmer, sowie beispielsweise ein Produktionsablauf erfassbar sein. Dabei ist beispielsweise durch eine Recheneinrichtung, welches insbesondere die erste und/oder eine weitere Recheneinrichtung sein kann, realisierbar, dass Schnittstellenprobleme und/oder Synchronisationsprobleme zwischen beispielsweise im Stand der Technik üblichen Datenmanagementsystemen umgangen werden.

So kann durch des erfindungsgemäßen Verfahrens der Produktdesigner beziehungsweise Produktentwickler Herstellungsdaten, insbesondere eine Herstellungsanleitung des Bauelements sowie Lizenzen anhand der Reproduktionsdaten besonders vorteilhaft für den Produktionsprozess bereitstellen beziehungsweise initiieren. Der Produktionsmaschinenhersteller erhält Logbücher seine Produktionsmaschine. Der Bauelementfertiger beziehungsweise Komponentenfertiger kann die Lizenz für die Herstellung des Produkts erwerben und lizensierte Produktionsprozesse durchführen, wodurch lizensierte Komponenten herstellerbar sind und gegebenenfalls ebenso die Logbücher der Produktionsmaschine einsehen. Schließlich ergibt sich für den Benutzer des Bauelements der Vorteil, dass durch die erfassten beziehungsweise erhobenen Daten Informationen zur Qualität des Bauelements vorliegen.

Damit die Daten besonders vorteilhaft vor fremden beziehungsweise unbefugten Zugriffen geschützt sind, ist in einer vorteilhaften Ausgestaltungsform der Erfindung vorgesehen, dass die Herstellungsdaten durch wenigstens einen ersten Schlüssel und/oder die Produktionsdaten durch wenigstens einen zweiten Schlüssel und/oder die Charakterdaten durch wenigstens einen dritten Schlüssel jeweils verschlüsselt gespeichert werden. Dabei ist der jeweilige Schlüssel insbesondere der jeweils öffentliche Schlüssel eines "private-public" Schlüsselpaares oder wenigstens durch ein asymmetrisches Kryptographieverfahren erzeugt beziehungsweise generiert. Der Vorteil dabei ist, da der jeweilige Schlüssel, also der erste Schlüssel, der zweite Schlüssel und/oder der dritte Schlüssel, welcher jeweils zum Verschlüsseln der jeweiligen Daten dient, jeweils der "public" beziehungsweise öffentliche Schlüssel des Schlüsselpaares sein kann, während des Herstellungsprozesses besonders vorteilhaft Daten verschlüsselt in den jeweiligen Dateicontainer geschrieben werden können.

In weiterer vorteilhafter Ausgestaltung der Erfindung wird überprüft, ob die Anfrage autorisiert ist, das Bereitstellen zumindest des Teils der gespeicherten Herstellungsdaten und/oder der Reproduktionsdaten und/oder der Produktionsdaten und/oder der Charakterdaten, insbesondere in Abhängigkeit der Anfrage, zu bewirken. Dabei kann die Anfrage beziehungsweise darüber hinaus das Bereitstellen, durch ein Teilen des zum Entschlüsseln des Teils notwendigen privaten Schlüssels des Schlüsselpaares realisierbar sein. Die Autorisierung könnte auch durch die Reproduktionsdaten, beziehungsweise die in diesen enthaltenen Lizenzen initiierbar sein. Darüber hinaus könnte die Freigabe beziehungsweise das Autorisieren durch ein digitales Rechtemanagement, welches im Englischen als "digital rights management" oder kurz DRM bezeichnet wird, realisiert werden. So können die jeweiligen Daten, also insbesondere die Herstellungsdaten, Produktionsdaten und Charakterdaten besonders vorteilhaft vor fremden und/oder unbefugten Zugriff geschützt werden und für den richtigen Akteur freigegeben werden. So kann besonders vorteilhafter Weise ein zugriffbeschränkbares, übergreifendes Datenmanagementsystem durch das Verfahren vorgehalten werden. Der Zugriff erfolgt durch die Autorisierung beziehungsweise des Anfragens der bereitzustellenden Daten für unterschiedliche am Herstellungsprozess beteiligte Parteien beziehungsweise Akteure individuell, beziehungsweise kann individuell geregelt werden. Der jeweilige Akteur, welcher die Daten auch jeweils individuell verschlüsseln kann, ist insbesondere der Produktdesigner, der Produktionsmaschinenhersteller, der Komponenten- beziehungsweise Bauelementfertiger sowie der Nutzer des Bauelements.

In vorteilhafter Ausgestaltung der Erfindung werden der erste Dateicontainer und der zweite Dateicontainer oder der zweite Dateicontainer und der dritte Dateicontainer oder der dritte Dateicontainer und der erste Dateicontainer oder der erste Dateicontainer und der zweite Dateicontainer und der dritte Dateicontainer durch einen gemeinsamen Dateicontainer ausgebildet. Das heißt es kann insbesondere ein Dateicontainer vorgesehen sein, in welchem sowohl die Herstellungsdaten als auch die Reproduktionsdaten, die Produktionsdaten sowie die Charakterdaten abgelegt werden, wodurch auf besonders vorteilhafte Weise die gesamten Daten des Herstellungsprozesses in einem Dateicontainer abgelegt werden können. Dadurch kann beispielsweise die Anfrage besonders schnell, insbesondere durch die elektronische Recheneinrichtung, verarbeitbar sein.

In vorteilhafter Ausgestaltung der Erfindung wird eine Prüfsumme der Herstellungsdaten und/oder eine Prüfsumme der Produktionsdaten und/oder eine Prüfsumme der Charakterdaten in dem jeweils zugehörigen Dateicontainer gespeichert. Die jeweilige Prüfsumme kann dabei im Wesentlichen einem jeweiligen so genannten Hashwert entsprechen. Die Prüfsumme beziehungsweise der Hashwert wird jeweils durch eine geeigneten Funktion, insbesondere eine so genannte Hashfunktion, errechnet und charakterisiert jeweils genau einen einzigen Zustand eines jeweiligen Datensatzes, wodurch auf besonders einfache und vorteilhafte Weise jeweils eine Integrität der jeweiligen Daten überprüft beziehungsweise sichergestellt werden kann.

In vorteilhafter Ausgestaltung der Erfindung wird eine Prüfsumme beziehungsweise ein Hashwert der Herstellungsdaten und/oder eine Prüfsumme beziehungsweise ein Hashwert der Produktionsdaten und/oder eine Prüfsumme beziehungsweise ein Hashwert der Charakterdaten in einem eigenen, weiteren Dateicontainer gespeichert. Das heißt die durch beispielsweise eine jeweilige Hashfunktion berechneten jeweiligen Prüfsummen der jeweiligen Daten werden insbesondere gemeinsam in einem Dateicontainer gespeichert. Durch die Verwendung eines extra Dateicontainers, welcher die jeweiligen Hashwerte speichert, kann eine besonders ressourcenschonende, weil beispielsweise besonders wenig Speicherplatz einer Speichervorrichtung benötigende, Möglichkeit zum Überprüfen der Integrität des Herstellungsprozesses gegeben sein. So kann beispielsweise besonders schnell beispielsweise über ein Datennetz auf die jeweilige Prüfsumme zugegriffen werden, welche dann für einen Integritätstest verwendet werden kann.

In vorteilhafter Ausgestaltung der Erfindung wird der jeweilige Dateicontainer in einer jeweiligen Datenbank gespeichert oder die Dateicontainer werden in derselben Datenbank gespeichert. Dabei kann eine Datenbank einen Speicherbereich der Speichereinrichtung beispielsweise der ersten elektronischen Recheneinrichtung umfassen oder aber beispielsweise über mehrere Speicherbereiche, insbesondere mehrerer elektronischer Recheneinrichtungen verteilt sei. Darüber hinaus können mehrere Datenbanken auf einer Speichereinrichtung beispielsweise der ersten Recheneinrichtung vorgehalten beziehungsweise gespeichert werden. Durch die Möglichkeit der Anpassung beziehungsweise Flexibilität, dass die Dateicontainer in einer Datenbank beziehungsweise jeweiligen Datenbanken vorgehalten werden, kann beispielsweise über eine der elektronischen Recheneinrichtung ein besonders guter Zugriff erfolgen, sodass insbesondere der jeweilige Akteur auf die für ihn relevanten Daten beispielsweise besonders schnell zugreifen kann.

In vorteilhafter Ausgestaltung der Erfindung wird wenigsten eine der Datenbanken beziehungsweise die möglicherweise einzige Datenbank als verteiltes Register betrieben. Im Englischen wird eine Datenbank, welches als verteiltes Register betrieben wird, als "distributed ledger" bezeichnet. Sind mehrere elektronische Recheneinrichtungen zueinander vernetzt beziehungsweise miteinander vernetzt, das heißt die jeweilige Recheneinrichtung weist jeweils wenigstens eine Schnittstelle auf, durch welche sie mit wenigstens einer der anderen Recheneinrichtungen Daten austauschen, beziehungsweise bereitstellen und empfangen kann, können durch das verteilte Register, insbesondere in richtiger Reihenfolge, Daten, wie beispielsweise die Herstellungsdaten, Reproduktionsdaten, Produktionsdaten sowie Charakterdaten, in der Datenbank durch mehrere Instanzen stets aktuell gehalten werden. Dabei ist das verteilte Register quasi in der Lage beziehungsweise generell die Grundlage für eine Blockkette beziehungsweise Blockchain, sodass die Dateicontainer beziehungsweise die Datenbank, in welcher die Dateicontainer abgelegt beziehungsweise gespeichert sind, als eine kontinuierlich erweiterbare Liste von Datensätzen betrieben werden kann, welche durch kryptografische Verfahren, beispielsweise durch die genannte Verschlüsselung und/oder Prüfsumme verkettbar sind. So kann eine zeitlich bestimmte integre Verkettung durch ein dezentral geführtes Netzes aus elektronischen Recheneinrichtungen umgesetzt werden. Durch den Einsatz des verteilten Registers beziehungsweise der daraus resultierenden Blockchain als Methode der Verwahrung beziehungsweise Ordnung der Dateicontainer kann dem jeweiligen Akteur jeweils einfach und vorteilhaft Zugriff auf die jeweils für ihn vorgesehenen Daten gestattet werden. Ähnlich wie bei der Generierung von beispielsweise digitalen Währungseinheiten können nun Rechte, insbesondere an dem produzierten Bauelement anhand der Blockchain nachgewiesen werden. So kann für jedes Produkt beispielsweise eine eindeutige Transaktion erstellt werden, sodass auch bei massenhaft gefertigten Bauelementen, wie beispielsweise Schrauben, auf besonders einfache und nachvollziehbare Weise jedem produzierten Einzelteil ein bestimmter Identifikator, welcher als Teil der jeweiligen Daten bei ihrer Erzeugung mit erzeugt wird, zuordenbar ist.

In weiterer vorteilhafter Ausgestaltung der Erfindung umfassen die Produktionsdaten insbesondere Konfigurationsdaten und/oder Wartungsmaßnahmen und/oder Warn-/Fehlermeldungen der Produktionsmaschine. Diese genannten Daten, Maßnahmen beziehungsweise Meldungen können beispielsweise besonders vorteilhaft von einem Hersteller der Produktionsmaschine verwendet werden, um diese zu verbessern.

In weiterer vorteilhafter Ausgestaltung der Erfindung umfassen die Produktionsdaten Zeit und/oder Dauer wenigstens eine Produktionsschritts des Produktionsprozesses. So ist beispielsweise auf besonders einfache Weise eine Auslastung der Produktionsmaschine beziehungsweise die Dauer eines Produktionsschritts und somit eine mögliche Stückzahl beziehungsweise ein Einbruch der Produktionsmenge oder ähnliches bei der Herstellung des Bauelements überwachbar beziehungsweise zu verwalten.

In weiterer vorteilhafter Ausgestaltung der Erfindung umfassen die Charakterdaten wenigstens einen Produktionsschritt des Produktionsprozesses und/oder Herstellerangaben und/oder ein Datum des Produktionsschrittes und/oder einen Ort des Produktionsschrittes. So ist beispielsweise auch bei massenhaft gefertigten Teilen jedem produzierten einzelnen Bauelement ein bestimmter Identifikator zugeordnet, über den dies eindeutig bestimmten Produktionsschritten auf der Produktionsanlage zugeordnet werden kann. Durch die hier genannten Daten, welche die Charakterdaten umfassen beziehungsweise durch die genannten Daten, welche die Produktionsdaten umfassen können, kann beispielsweise im Nachhinein auch eine bestimmte Reihenfolge zwischen den produzierten Bauelementen hergestellt werden. Dies kann beispielsweise nützlich sein, wenn von einem zum nächsten Bauelement in einem bestimmten Zeitraum während des Produktionsprozesses beziehungsweise innerhalb der Produktion Mängel auftreten, welche beispielsweise auf Verunreinigungen von Ausgangsmaterial ab einem Zeitpunkt X zurückzuführen sind. Die Mängel können somit besonders einfach feststell- beziehungsweise nachweisbar sein.

In weiterer vorteilhafter Ausgestaltung der Erfindung wird dem Bauelement ein Hardware-Token zugeordnet, welcher beispielsweise als Nahfeldfunktechnikelement (NFC-Chip, "near field communication" oder RFID) oder vergleichbares ausgebildet sein kann, durch welchen anhand der Reproduktionsdaten das Bauelement eindeutig identifizierbar ist. So lässt sich beispielsweise auf besonders vorteilhafte Weise das produzierte Bauelement eindeutig mit einer Transaktion in dem jeweiligen Dateicontainer beziehungsweise in der Blockchain verbinden. So kann beispielsweise in jeweiligen Bereichen, insbesondere dem Dateicontainer für die Reproduktionsdaten ein Code eingearbeitet werden, der dann eindeutig mit dem Hardware-Token verbunden ist. So kann beispielsweise eine Softwarelizenz in eine Hardwarelizenz übergeführt werden.

Unter additiver Fertigung ist dabei beispielsweise insbesondere ein 3D-Drucken beziehungsweise Lasersintern zu verstehen. Unter subtraktiver Fertigung kann Schleifen, Fräsen und/oder beispielsweise Drehen verstanden werden. Das heißt sowohl die additive als auch die subtraktive Fertigung sind generative beziehungsweise generische Fertigungsverfahren. Für diese eignet sich das Verfahren zur Verwaltung besonders gut, da die dazu benötigten Produktionsmaschinen besonders einfach eine große Vielzahl unterschiedlichster Bauelemente fertigen und beliebig reproduzieren können. Dadurch steigt beispielsweise die Gefahr nicht autorisierter Bauelementkopien, sodass durch eine Autorisierung, beispielsweise durch die Reproduktionsdaten des Verfahrens, oder einem Verwalten des Bereitstellen des Teils der gespeicherten Daten, diese besonders einfach vermieden werden können, wodurch beispielsweise eine Sicherheit oder Langlebigkeit des Bauteils gewährbar ist.

Ein weiterer Aspekt der Erfindung betrifft ein Computerprogramm. Das Computerprogramm ist direkt in einen Speicher einer elektronischen Recheneinrichtung ladbar, und umfasst Programm-Mittel, um die Schritte des erfindungsgemäßen Verfahrens auszuführen, wenn das Programm in der Recheneinrichtung ausgeführt wird.

Ein ebenfalls weiterer Aspekt der Erfindung betrifft einen elektronisch lesbaren Datenträger mit darauf gespeicherten elektronisch lesbaren Steuerinformationen, welche zumindest ein erfindungsgemäßes Computerprogramm nach dem vorhergehenden Aspekt umfassen und derart ausgestaltet sind, dass sie bei Verwendung des Datenträgers in einer elektronischen Recheneinrichtung das erfindungsgemäße Verfahren durchführen. Ein erfindungsgemäßes Computerprogramm implementiert ein erfindungsgemäßes Verfahren auf einer Steuereinrichtung beziehungsweise Recheneinrichtung, wenn es auf der Steuereinrichtung beziehungsweise Recheneinrichtung ausgeführt wird.

Das Computerprogramm kann hierbei auch in Form eines Computerprogrammprodukts vorliegen, welches direkt in einen Speicher einer Recheneinrichtung ladbar ist, mit Programmmitteln, um ein erfindungsgemäßes Verfahren auszuführen, wenn das Computerprogrammprodukt in der Recheneinrichtung ausgeführt wird. Der erfindungsgemäße elektronisch lesbare Datenträger umfasst darauf gespeicherte elektronisch lesbare Steuerinformationen, welche zumindest ein erfindungsgemäßes Computerprogramm umfassen und derart ausgestaltet sind, dass sie bei Verwendung des Datenträgers in einer Recheneinrichtung ein erfindungsgemäßes Verfahren durchführen.

Vorteile des erfindungsgemäßen Verfahrens sind als Vorteile des erfindungsgemäßen Computerprogramms sowie als Vorteile des erfindungsgemäßen elektronischen Datenträgers anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung wie in den Ansprüchen definiert zu verlassen.

Die Zeichnung zeigt in:
- FIG 1: ein Verfahren zur Verwaltung eines Produktionsprozesses zur Herstellung wenigstens eines Bauelements in einem Ablaufdiagramm; und
- FIG 2: ein Blockdiagramm einer elektronischen Recheneinrichtung zur Durchführung des Verfahrens der FIG 1.

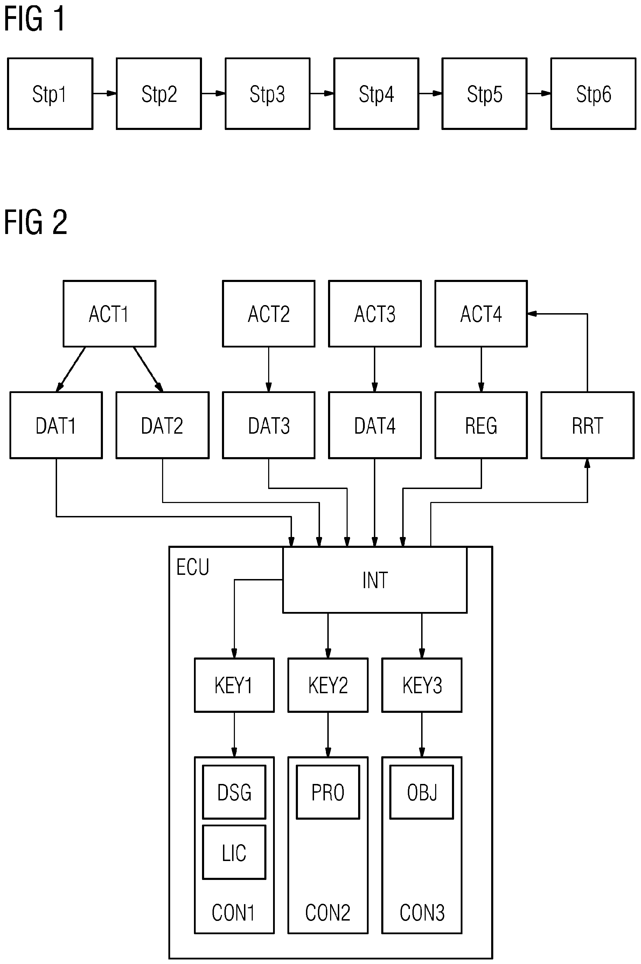

FIG 1 zeigt ein Ablaufdiagramm eines Verfahrens zur Verwaltung eines Produktionsprozesses zur Herstellung wenigstens eines Bauelements. Durch das Verfahren kann insbesondere ein besonders großer Bereich des Produktionsprozesses, von Produktdesign bis über die Herstellung des Bauelements bis zu Garantieansprüchen eines Verwenders des Bauelements, besonders vorteilhaft verwaltet und/oder überwacht werden, wozu mehrere Schritte vorgesehen sind.

In einem ersten STP1 genannten Schritt werden Herstellungsdaten DSG, auf deren Basis das Bauelement durch den Produktionsprozess herstellbar ist, in einem ersten Dateicontainer CON1 gespeichert. In einem zweiten Schritt STP2 werden sich auf das Bauelement beziehende Reproduktionsdaten LIC in dem ersten Dateicontainer CON1 gespeichert, wobei die Reproduktionsdaten LIC wenigstens eine sich auf das Herstellen des Bauelements beziehende Erlaubnis charakterisieren, welches beispielsweise eine Lizenz für beispielsweise einen Akteur ACT3 ist, welcher ein Bauelementhersteller beziehungsweise Bauelementfertiger ist, zur Herstellung des Bauelements berechtigt. In einem dritten Schritt STP3 werden Produktionsdaten PRO, welche wenigstens einen Zustand einer Produktionsmaschine während des Produktionsprozesses charakterisieren, in einem zweiten Dateicontainer CON2 gespeichert. In einem vierten Schritt STP4 werden Charakterdaten OBJ, welche wenigstens eine Eigenschaft des durch den Produktionsprozess hergestellten Bauelements charakterisieren, in einem dritten Dateicontainer CON3 gespeichert. In einem weiteren fünften Schritt STP5 wird eine Anfrage REQ empfangen, welche beispielsweise der bereits genannte Akteur ACT3 oder ein weiterer Akteur ACT1, ACT2, ACT4 empfängt, welcher am Produktionsprozess beteiligt sein kann, und in einem sechsten Schritt STP6 wird in Abhängigkeit der Anfrage REQ zumindest ein Teil PRT der gespeicherten Herstellungsdaten DSG und/oder Reproduktionsdaten LIC und/oder Produktionsdaten PRO und/oder Charakterdaten OBJ bereitgestellt.

Um das Verfahren besonders vorteilhaft durchführen zu können, werden im Ausführungsbeispiel die Herstellungsdaten PRO durch wenigstens einen ersten Schlüssel KEY1, die Produktionsdaten PRO durch wenigstens einen zweiten Schlüssel KEY2 und die Charakterdaten OBJ durch wenigstens einen dritten Schlüssel KEY3 verschlüsselt abgespeichert, wobei der jeweilige Schlüssel KEY1-KEY3 ein Schlüssel eines "public-key" beziehungsweise "public-private" Schlüsselpaares sein kann. Alternativ können die Herstellungsdaten DSG beziehungsweise Produktionsdaten PRO beziehungsweise Charakterdaten OBJ auch durch ein jeweils andere Verschlüsselungsverfahren verschlüsselt gespeichert werden.

Um das Verfahren darüber hinaus besonders sicher durchführen zu können und die jeweiligen, insbesondere verschlüsselt gespeicherten Daten vor unbefugtem Zugriff schützen zu können, erfolgt beispielsweise anhand des Schlüssels eine Überprüfung bei der Anfrage REQ ob diese autorisiert ist beziehungsweise überhaupt den Anfragenden, also einem der Akteure ACT1- ACT4, berechtigt, den angefragten Teil der gespeicherten Herstellungsdaten DSG und/oder Reproduktionsdaten LIC und/oder Produktionsdaten PRO und/oder Charakterdaten OBJ einzusehen, das heißt es wird überprüft ob die Anfrage REQ autorisiert ist, das Bereitstellen zumindest des Teils PRT zu bewirken.

Dabei kann der jeweilige Dateicontainer CON1-CON3 einzeln ausgebildet sein oder die Dateicontainer CON1-CON3 können auch zu einem gemeinsamen Dateicontainer zusammengefasst werden. So oder so wird der jeweilige Dateicontainer CON1-CON3 vorteilhafterweise in einer jeweiligen Datenbank gespeichert. Alternativ oder zusätzlich können falls jeweils mehrere Dateicontainer CON1-CON3 vorhanden sind, das heißt der erste Dateicontainer CON1, der zweite Dateicontainer CON2 und der dritte Dateicontainer CON3 nicht zu einem gemeinsamen Dateicontainer zusammengefasst werden, ebenfalls trotzdem in einer gleichen Datenbank abgespeichert werden. Das heißt der jeweilige Dateicontainer CON1-CON3 kann auf mannigfaltige Art und Weise beispielsweise in einer Speichervorrichtung, einem insbesondere dezentral organisierten Verbund elektronischer Recheneinrichtungen ECU abgelegt beziehungsweise gespeichert werden. So kann die Datenbank vorteilhaftweise als wenigstens ein verteiltes Register betrieben werden, das heißt anders ausgedrückt können die Dateicontainer CON1-CON3 und insbesondere die jeweiligen in den Dateicontainern CON1-CON3 vorhandenen Daten, also die Herstellungsdaten DSG, die Reproduktionsdaten LIC, die Produktionsdaten PRO sowie die Charakterdaten OBJ als jeweilige Transaktion in einer so genannten Blockchain beziehungsweise Blockkette vorgehalten werden.

Unter Blockchain wird insbesondere eine Datenbank verstanden, deren Integrität durch Speicherung des Hashwerts beziehungsweise einer Prüfsumme eines vorausgegangenen Datensatzes in einem jeweils nachfolgenden Datensatz gesichert ist, sodass eine Integrität überprüft werden kann. So wird vorteilhafter Weise eine Prüfsumme der Herstellungsdaten DSG und/oder eine Prüfsumme der Produktionsdaten PRO und/oder eine Prüfsumme der Charakterdaten OBJ in dem jeweils zugehörigen Dateicontainer CON1-CON3 oder in einem eigenen weiteren Dateicontainer, welcher insbesondere zum Speichern der Prüfsumme ausgebildet ist, gespeichert. Ebenso könnte eine Prüfsumme für die Reproduktionsdaten LIC gespeichert werden.

An dem Herstellungsprozess sind wie bereits genannt verschiedene Akteure ACT1-ACT4 beteiligt, dabei handelt es sich beispielsweise um einen Produktdesigner und/oder einen Produktionsmaschinenhersteller und/oder den Bauelementfertiger und/oder einen Anwender des Bauelements.

Durch das Ausführungsbeispiel des Verfahrens beziehungsweise das in FIG 1 dargestellte Verfahren ergibt sich für jeden der genannten Akteure ACT1-ACT4 wenigstens ein Vorteil. So ist das Verfahren dazu ausgebildet, dass insbesondere durch eine Instanz, beispielsweise eine elektronische Recheneinrichtung ECU, eine zugriffbeschränkbare, übergreifende Überwachung oder Verwaltung beziehungsweise Management des Produktionsprozesses bei der Herstellung des wenigstens einen Bauelements möglich ist. Dabei werden durch das Verfahren sämtliche relevante Daten, insbesondere die Herstellungsdaten DSG, die Reproduktionsdaten LIC, die Produktionsdaten PRO sowie die Charakterdaten OBJ, verwaltet und können von einem jeweiligen Akteur ACT1-ACT4, über eine entsprechenden Datenschnittstelle bereitstellt und/oder empfangen werden. Insbesondere sind die Daten durch die Recheneinrichtung ECU bei dem Verfahren durch die Schnittstelle INT empfangbar, und können durch die Recheneinrichtung ECU verschlüsselt und/oder verifiziert werden. Insbesondere durch die Ausbildung als verteilter Register beziehungsweise Blockchain ist durch das Verfahren die Möglichkeit bereitgestellt, einen Zugriff beziehungsweise eine Anfrage REQ beziehungsweise ein Abfragen zumindest des Teils PRT, individuell für einen der Akteure ACT1-ACT4 regeln zu können.

FIG 2 zeigt ein Blockdiagramm einer elektronischen Recheneinrichtung ECU, durch welche das in FIG 1 dargestellte Verfahren durchführbar ist. Dabei weist die elektronische Recheneinrichtung ECU wenigstens eine Schnittstelle INT auf, über welche Daten empfangen und gesendet werden können. Darüber hinaus kann über die Schnittstelle INT beispielsweise auch die Anfrage REQ nach STP 5 des Verfahrens empfangen werden. Ferner können über die Schnittstelle INT beispielsweise erste Daten DAT1 empfangen werden, welche von einem ersten Akteur ACT1 in dem durch das Verfahren zu überwachenden beziehungsweise zu verwaltenden Produktionsprozess eingebracht worden sind. Bei den ersten Daten DAT1, welche von der Recheneinrichtung ECU empfangen werden, kann es sich um Daten handeln, aus denen die Herstellungsdaten DSG resultieren, das heißt die ersten Daten DAT1 können die Herstellungsdaten DSG sein oder die Herstellungsdaten DSG können aus diesen ersten Daten DAT1 erzeugt beziehungsweise erstellt werden. Dabei ist der erste Akteur ACT1 insbesondere beispielsweise der Produktionsdesigner, welcher in den Herstellungsdaten DSG eine Art Herstellungsanleitung angeben kann, wodurch das Bauelement herstellbar ist. Insbesondre durch den Akteur ACT1 oder eine weiteren der Akteure ACT1-ACT4 können zweite Daten DAT2 bereitgestellt werden, welche ebenfalls von der Recheneinrichtung ECU über die Schnittstelle INT empfangbar sind. Bei den zweiten Daten DAT2 kann es sich insbesondere um Daten handeln, aus denen die Reproduktionsdaten LIC erzeugt werden können, beziehungsweise um die Reproduktionsdaten LIC selbst.

Ein zweiter Akteur ACT 2 stellt für den Herstellungsprozess Daten DAT3 bereit, welche über die Schnittstelle INT von der Recheneinrichtung ECU empfangbar sind. Bei diesen dritten Daten DAT3 kann es sich um Daten handeln, aus denen die Produktionsdaten PRO resultieren, das heißt die dritten Daten beinhalten die Produktionsdaten PRO oder aus den dritten Daten DAT3 können die Produktionsdaten PRO erstellt beziehungsweise erzeugt werden. Analog geht es mit vierten Daten DAT4 zu, welche über das Interface beziehungsweise die Schnittstelle INT empfangbar sind und insbesondere von einem dritten Akteur ACT3, welcher insbesondere der Teileproduzent beziehungsweise Bauelementfertiger ist, bereitgestellt ist. Dabei können insbesondere die Charakterdaten OBJ aus den vierten Daten DAT4 erzeugt werden beziehungsweise umfassen die vierten Daten DAT4 bereits die Charakterdaten OBJ.

Durch einen vierten Akteur ACT4, insbesondere einen Benutzer des erzeugten Bauelements kann eine Anfrage REQ über die Schnittstelle INT aufgegeben werden. Daraufhin kann ein Teil der Daten PRT dem Akteur ACT4 beispielsweise bereitgestellt werden.

Das Ablegen der Daten OBJ, PRO, LIC, DSG erfolgt jeweils in einem entsprechenden Container CON1-CON3, wobei DAT1 als Herstellungsdaten DSG durch einen Schlüssel KEY1 verschlüsselt in dem Dateicontainer CON1 abgelegt werden, die Daten DAT2 werden ebenfalls im Dateicontainer CON1 als Reproduktionsdaten LIC abgelegt. Die dritten Daten DAT3, werden insbesondere als Produktionsdaten PRO, welche den Zustand der Produktionsmaschine während des Produktionsprozesses insbesondere charakterisieren, als Produktionsdaten PRO im Dateicontainer CON2 abgelegt, wobei diese durch den Schlüssel KEY2 verschlüsselt werden. Die aus den Daten DAT4 erzeugten Charakterdaten OBJ werden als Charakterdaten OBJ im Dateicontainer CON3 verschlüsselt durch den Schlüssel KEY3 gespeichert.

Vorteilhafterweise umfassen die Produktionsdaten PRO Konfigurationsdaten und/oder Wartungsmaßnahmen und/oder durchgeführte Produktionsprozesse und/oder Warnmeldungen beziehungsweise Fehlermeldungen der Produktionsmaschine. Darüber hinaus können die Produktionsdaten vorteilhafter Weise eine Zeit und/oder Dauer wenigstens eines der Produktionsschritte des Produktionsprozesses umfassen.

Die Charakterdaten OBJ umfassen vorteilhafter Weise wenigstens einen Produktionsdaten des Produktionsprozesses und/oder Herstellungsdaten, also beispielsweise bezüglich betreffend des Akteurs ACT3 und/oder einen Ort des Produktionsschrittes sowie ein Datum beziehungsweise eine Zeit des Produktionsprozesses, an welchem beispielsweise das Bauelement final hergestellt wurde. Dabei wird das Bauelement vorzugsweise durch ein generatives Verfahren, wie beispielsweise eine additive und/oder eine subtraktive Fertigung hergestellt, sodass sich insbesondere die Produktionsmaschine zur Ausbildung einer Vielzahl von Bauelementen eignet, wodurch insbesondere durch die Reproduktionsdaten LIC eine besonders gute Verwaltung möglich ist.

So kann durch das gezeigte Verfahren beziehungsweise ein Computerprogramm, welches beispielsweise direkt in einem Speieher der Recheneinrichtung ECU ladbar ist, erreicht werden, dass Komponentendesigns, welche beispielsweise Teil der Herstellungsdaten DSG sind, besonders vorteilhaft verwaltet werden können. Ferner kann ein Logbuch der Produktionsmaschine in den Produktionsdaten PRO angelegt werden und in dem beziehungsweise für das jeweils einzelne Bauelement kann in den Charakterdaten OBJ beispielsweise die verwendete Lizenz angemerkt werden. So können beispielsweise durch das Verfahren besonders vorteilhafter Weise aufgrund des Logbuchcharakters der Produktionsdaten PRO besonders vorteilhaft Reparatur- und Wartungsmaßnahmen insbesondere vorausschauend durchgeführt werden, sodass vorteilhafterweise ein so genanntes "predictive maintenance" durchführbar ist.

Ferner entfallen Schnittstellen und Synchronisationsprobleme zwischen unterschiedlichen Datenmanagementsystemen da beispielsweise alles vorteilhafterweise durch die Dateicontainer CON1-CON3 durch die Recheneinrichtung ECU ausgebildet ist. Durch die Verschlüsselungskonzepte, insbesondere mit den Schlüsseln KEY1-KEY3 kann jeweils der individuelle Zugriff der einzelnen Akteure ACT1-ACT4 auf jeweils für sie vorgesehenen Daten (DSG, PRO, OBJ) geregelt werden. So kann beispielsweise der Produktionsdesigner ACT1 Herstellungsanleitungen zu den Herstellungsdaten DSG hinzufügen oder editieren oder deren Lizensierungsmöglichkeiten ändern. Der Akteur ACT3, also der Komponenten- beziehungsweise Bauelementfertiger, kann die Lizensierung in Form von Zugang durch die Reproduktionsdaten LIC erwerben und beispielsweise lizensierte Produktionsprozesse durchführen und dadurch das wenigstens eine lizensierte Bauelement herstellen. Der Benutzer des Bauelements, also insbesondere der Akteur ACT4 kann die Lizenz der Komponente, beziehungsweise des Bauelements einzeln und damit beispielsweise deren Originalität bestätigen.

Durch das Verfahren kann beispielsweise jede Zustandsänderung der Produktionsmaschine als Transaktion in einer Blockchain abgelegt werden. Durch die Verwendung der Blockchain, insbesondere beispielsweise durch eine verteilte Authentifizierung, kann später beziehungsweise jederzeit, insbesondere durch die abgelegten Prüfsummen die Authentizität beziehungsweise Integrität der durch das Verfahren gesammelten beziehungsweise gespeicherten Daten bestätigt werden, sodass diese beispielsweise sowohl von den Akteuren ACT1-ACT4, also dem Maschinenhersteller, dem Produktdesigner, dem Bauelementfertiger und auch dem Benutzer der Teile beispielsweise für rechtliche Fragestellungen herangezogen werden kann und eine Manipulation eines Datensatzes durch beispielsweise einen der Akteure ACT1-ACT4 ausgeschlossen werden kann. So kann beispielsweise besonders vorteilhaft eine Garantiesicherung für eine bestimmte Anzahl an bearbeiteten Bauelementen durch den Bauelementhersteller ACT3 oder die Zusage eines Benutzers des Akteurs ACT4, Wartungsintervalle einzuhalten, besonders vorteilhaft verwaltet beziehungsweise gesteuert und/oder kontrolliert werden. Dabei kann für jeden Produktionsschritt des Produktionsprozesses beziehungsweise ein an einer Produktionsanlage durchzuführenden Produktionsschritt zentral beziehungsweise über die Blockchain zusammengeführt und verwaltet werden.

Anzumerken ist, dass auch jeweils ein einzelner der Dateicontainer CON1-CON3 als Blockchain ausgebildet sein kann und so beispielsweise der Dateicontainer CON1 als Blockchain speziell für insbesondere CAD-Daten verwendet werden kann, welche beispielsweise jeweils insbesondere die Lizenzproduktion eines bestimmten Bauelements ermöglichen. So kann diese Blockchain ganz einfach beispielsweise durch Vereinigung mit dem als Blockchain ausgebildeten Dateicontainer CON2 und dem als Blockchain ausgebildeten Dateicontainer CON3 als so genannte Superblockchain zusammengefasst werden.

Bei dem Produktionsprozess können auch unterschiedliche Detailgrade insbesondere der Herstellungsdaten DSG nützlich sein, wobei ein jeweiliger Detailgrad als "level of detail" bezeichnet werden kann. So kann beispielsweise eine in den Reproduktionsdaten LIC enthaltene Lizenz für die Produktion eines bestimmten CAD-Teils auf einem 3D-Drucker, welcher beispielsweise die Produktionsmaschine darstellt, erstellt werden. Dabei wird jedoch nur ein bestimmter Teil des Bauelements in maximaler Detailstufe freigegeben, beispielsweise an der Position eine Schnittstelle, wobei die Schnittstelle beispielsweise für einen Einbau eines weiteren von dem Bauelement unterschiedlichen Bauelements vorgesehen ist. Andere Teile des Bauelements werden in geringerer Detailstufe freigegeben und können gegebenenfalls durch einen Lizenznehmer noch freigeschaltet werden. Dieser Gestaltungsspielraum lässt sich auch insbesondere dazu einsetzen, um ein produzierte Bauelement eindeutig mit einer Transaktion in der Blockchain zu verbinden. So kann beispielsweise eine Transaktion in der Blockchain eindeutig mit einem produzierten Bauelement verbunden werden, was beispielsweise durch Einarbeitung eines Codes in die Reproduktionsdaten LIC möglich ist, welche beispielsweise auch über einen Hardware-Token mit einer Hardwarelizenz des Bauelements verbunden beziehungsweise verknüpft werden können.

Durch das vorgestellte Verfahren vereinfachen sich viele Arbeitsabläufe, welche in Zusammenhang mit dem Produktionsprozess auftreten. Beispielsweise kann der Akteur ACT1, der Produktionsdesigner neue Komponenten und deren Herstellungsprozesse über die Blockchain beziehungsweise die Datenbank, welche den Dateicontainer CON1 beinhaltet oder auch die anderen Dateicontainer CON2-CON3, insbesondere durch das mit dem Schlüssel KEY1 angebotene Verschlüsselungskonzept beziehungsweise das Verschlüsselungskonzept der Blockchain einem Kunden, insbesondere einem Bauelementfertiger, welcher der Akteur ACT3 ist, direkt zum Kauf anbieten und entsprechend den Zugriff beziehungsweise die Anfrage durch das vorgestellten Verfahren autorisieren.

Ferner kann bei Wartungsmaßnahmen der Produktionsmaschine ein Wartungspersonal Wartungs- und Instandhaltungshistorien durch die Produktionsdaten PRO abrufen. Darüber hinaus kann zur Analyse von Bauelementen, beispielsweise im Fehlerfall oder zur Optimierung der Produktion, die Historie des Maschinenzustands, welche ebenfalls in den Produktionsdaten PRO gespeichert ist, inklusive der oben beschriebenen Wartungsmaßnahmen durch den Produktentwickler beziehungsweise Produktdesigner, also Akteur ACT1 abgerufen werden, sodass der Prozess verbessert werden kann. Der Akteur ACT2, insbesondere der Produktionsmaschinenhersteller, bekommt ferner direkt aktuellste Betriebsinformationen seiner Produktionsmaschine. Ferner können somit beziehungsweise insbesondere während des Produktionsprozesses während der einzelnen Produktionsschritte jeweilige Daten des jeweiligen Produktionsschrittes besonders einfach durch das Verfahren registriert und somit, insbesondere aktiv, verwaltet werden.

### Bezugszeichenliste

- ACT1: erster Akteur
- ACT2: zweiter Akteur
- ACT3: dritter Akteur
- ACT4: vierter Akteur
- CON1: erster Dateicontainer
- CON2: zweiter Dateicontainer
- CON3: dritter Dateicontainer
- DAT1: erste Daten
- DAT2: zweite Daten
- DAT3: dritte Daten
- DAT4: vierte Daten
- DSG: Herstellungsdaten
- ECU: Recheneinrichtung
- INT: Schnittstelle
- KEY1: erster Schlüssel
- KEY2: zweiter Schlüssel
- KEY3: dritter Schlüssel
- LIC: Reproduktionsdaten
- OBJ: Charakterdaten
- PRO: Produktionsdaten
- PRT: Teil der Daten
- REQ: Anfrage
- STP1: erster Schritt
- STP2: zweiter Schritt
- STP3: dritter Schritt
- STP4: vierter Schritt
- STP5: fünfter Schritt
- STP6: sechster Schritt

## Patentansprüche

1. Verfahren zur Verwaltung eines Produktionsprozesses zur Herstellung wenigstens eines Bauelements, mit den Schritten:
- Empfangen und Speichern von Herstellungsdaten (DSG), auf deren Basis das Bauelement durch den Produktionsprozess herstellbar ist, in einem ersten Dateicontainer (CON1) (STP1);
- Empfangen und Speichern von sich auf das Bauelement beziehenden Reproduktionsdaten (LIC) in dem ersten Dateicontainer (CON1), wobei die Reproduktionsdaten (LIC) wenigstens eine sich auf das Herstellen des Bauelements beziehende Erlaubnis charakterisieren (STP2);
- und den kennzeichnenden Schritten:Empfangen und Speichern von Produktionsdaten (PRO), welche wenigstens einen Zustand wenigstens einer Produktionsmaschine während des Produktionsprozesses charakterisieren, in einem zweiten Dateicontainer (CON2) (STP3);
- Empfangen und Speichern von Charakterdaten (OBJ), welche wenigstens eine Eigenschaft des durch den Produktionsprozess hergestellten Bauelements charakterisieren, in einem dritten Dateicontainer (CON3) (STP4);
- Empfangen wenigstens einer Anfrage (REQ) (STP5);
- Zuordnen eines vorgebbaren Detailgrads zu den Herstellungsdaten (DSG), welcher eine Genauigkeit charakterisiert, mit welcher die Herstellungsdaten (DSG) bereitzustellen sind;
- Bereitstellen zumindest eines Teils (PRT) der gespeicherten Herstellungsdaten (DSG) und/oder Reproduktionsdaten (LIC) und/oder Produktionsdaten (PRO) und/oder Charakterdaten (OBJ) in Abhängigkeit von der Anfrage (REQ) (STP6), wobei die Herstellungsdaten (DSG) auf Basis des Detailgrads in Abhängigkeit von der Anfrage (REQ) bereitgestellt werden; und
- Fertigen zumindest eines Teils des Bauelements durch additive und/oder subtraktive Fertigung.

2. Verfahren nach Anspruch 1,
**dadurch gekennzeichnet, dass**
die Herstellungsdaten (DSG) durch wenigstens einen ersten Schlüssel (KEY1) und/oder die Produktionsdaten (PRO) durch wenigstens einen zweiten Schlüssel (KEY2) und/oder die Charakterdaten (OBJ) durch wenigstens einen dritten Schlüssel (KEY3) verschlüsselt gespeichert werden.

3. Verfahren nach Anspruch 1 oder 2,
**dadurch gekennzeichnet, dass**
überprüft wird, ob die Anfrage (REQ) autorisiert ist, das Bereitstellen zumindest des Teils (PRT) zu bewirken.

4. Verfahren nach einem der vorhergehenden Ansprüche, **dadurch gekennzeichnet, dass**
der erste Dateicontainer (CON1) und der zweite Dateicontainer (CON2) oder der zweite Dateicontainer (CON2) und der dritte Dateicontainer (CON3) oder der dritte Dateicontainer (CON3) und der erste Dateicontainer (CON1) oder der erste Dateicontainer (CON1) und der zweite Dateicontainer (CON2) und der dritte Dateicontainer (CON3) durch einen gemeinsamen Dateicontainer ausgebildet werden.

5. Verfahren nach einem der vorhergehenden Ansprüche, **dadurch gekennzeichnet, dass**
eine Prüfsumme der Herstellungsdaten (DSG) und/oder eine Prüfsumme der Produktionsdaten (PRO) und/oder eine Prüfsumme der Charakterdaten (OBJ) in dem jeweils zugehörigen Dateicontainer (CON1-CON3) gespeichert wird.

6. Verfahren nach einem der vorhergehenden Ansprüche, **dadurch gekennzeichnet, dass**
eine Prüfsumme der Herstellungsdaten (DSG) und/oder eine Prüfsumme der Produktionsdaten (PRO) und/oder eine Prüfsumme der Charakterdaten (OBJ) in einem eigenen, weiteren Dateicontainer gespeichert wird.

7. Verfahren nach einem der vorhergehenden Ansprüche, **dadurch gekennzeichnet, dass**
der jeweilige Dateicontainer (CON1-CON3) in einer jeweiligen Datenbank gespeichert wird oder die Dateicontainer (CON1-CON3) in derselben Datenbank gespeichert werden.

8. Verfahren nach Anspruch 7,
**dadurch gekennzeichnet, dass**
wenigsten eine der Datenbanken als verteiltes Register betrieben wird.

9. Verfahren nach einem der vorhergehenden Ansprüche, **dadurch gekennzeichnet, dass**
die Produktionsdaten (PRO) Konfigurationsdaten und/oder Wartungsmaßnahmen und/oder durchgeführte Produktionsprozesse und/oder Warn-/Fehlermeldungen der Produktionsmaschine umfassen.

10. Verfahren nach einem der vorhergehenden Ansprüche, **dadurch gekennzeichnet, dass**
die Produktionsdaten (PRO) Zeit und/oder Dauer wenigstens eine Produktionsschritts des Produktionsprozesses umfassen.

11. Verfahren nach einem der vorhergehenden Ansprüche, **dadurch gekennzeichnet, dass**
die Charakterdaten (OBJ) wenigstens einen Produktionsschritt des Produktionsprozesses und/oder Herstellerangaben und/oder ein Datum des Produktionsschrittes und/oder einen Ort des Produktionsschrittes umfassen.

12. Verfahren nach einem der vorhergehenden Ansprüche, **dadurch gekennzeichnet, dass**
dem Bauelement ein Hardware-Token zugeordnet wird, welcher anhand der Reproduktionsdaten (LIC) identifizierbar ist.

13. Computerprogramm, welches direkt in einen Speicher einer elektronischen Recheneinrichtung (ECU) ladbar ist, mit Programm-Mitteln, um die ersten sieben Schritte des Verfahrens nach Anspruch 1 und dessen Unteransprüche auszuführen, wenn das Programm in der Recheneinrichtung (ECU) ausgeführt wird.

14. Elektronisch lesbarer Datenträger mit darauf gespeicherten elektronisch lesbaren Steuerinformationen, welche zumindest ein Computerprogramm nach Anspruch 13 umfassen und derart ausgestaltet sind, dass sie bei Verwendung des Datenträgers in einer elektronischen Recheneinrichtung (ECU) ein Verfahren nach einem der Ansprüche 1 bis 12 durchführen.

## Claims

1. Method for managing a production process for fabricating at least one component, comprising the steps:
- receiving and storing fabrication data (DSG) on the basis of which the component can be fabricated by the production process, in a first file container (CON1) (STP1);
- receiving and storing reproduction data (LIC) which relates to the component, wherein said reproduction data (LIC) characterises at least one permission relating to the fabrication of the component, in the first file container (CON1) (STP2);
- and the specific steps: receiving and storing production data (PRO) which characterises at least one state of at least one production machine during the production process, in a second file container (CON2) (STP3);
- receiving and storing character data (OBJ) which characterises at least one property of the component that is fabricated by the production process, in a third file container (CON3) (STP4);
- receiving at least one request (REQ) (STP5);
- assigning the fabrication data (DSG) a level of detail that can be predefined and characterises an accuracy with which the fabrication data (DSG) must be provided;
- providing at least one part (PRT) of the stored fabrication data (DSG) and/or reproduction data (LIC) and/or production data (PRO) and/or character data (OBJ) as a function of the request (REQ) (STP6), wherein the fabrication data (DSG) is provided on the basis of the level of detail as a function of the request (REQ)
- manufacturing at least one part of the component by means of additive and/or subtractive manufacturing.

2. Method according to claim 1,
**characterised in that**
the fabrication data (DSG) is stored in an encrypted manner using at least one first key (KEY1) and/or the production data (PRO) is stored in an encrypted manner using at least one second key (KEY2) and/or the character data (OBJ) is stored in an encrypted manner using at least one third key (KEY3).

3. Method according to claim 1 or 2,
**characterised in that**
it is verified whether the request (REQ) is authorised to effect the provision of at least the part (PRT).

4. Method according to one of the preceding claims, **characterised in that**
the first file container (CON1) and the second file container (CON2) or the second file container (CON2) and the third file container (CON3) or the third file container (CON3) and the first file container (CON1) or the first file container (CON1) and the second file container (CON2) and the third file container (CON3) take the form of a shared file container.

5. Method according to one of the preceding claims, **characterised in that**
a checksum of the fabrication data (DSG) and/or a checksum of the production data (PRO) and/or a checksum of the character data (OBJ) is stored in the respectively associated file container (CON1-CON3).

6. Method according to one of the preceding claims, **characterised in that**
a checksum of the fabrication data (DSG) and/or a checksum of the production data (PRO) and/or a checksum of the character data (OBJ) is stored in a separate further file container.

7. Method according to one of the preceding claims, **characterised in that**
the respective file container (CON1-CON3) is stored in a respective database or the file containers (CON1-CON3) are stored in the same database.

8. Method according to claim 7,
**characterised in that**
at least one of the databases is operated as a distributed ledger.

9. Method according to one of the preceding claims, **characterised in that**
the production data (PRO) comprises configuration data and/or maintenance measures and/or production processes that have been performed and/or warning/error reports relating to the production machine.

10. Method according to one of the preceding claims, **characterised in that**
the production data (PRO) comprises time and/or duration of at least one production step of the production process.

11. Method according to one of the preceding claims, **characterised in that**
the character data (OBJ) comprises at least one production step of the production process and/or fabricator details and/or a date of the production step and/or a location of the production step.

12. Method according to one of the preceding claims, **characterised in that**
the component is assigned a hardware token which can be identified with reference to the reproduction data (LIC).

13. Computer program which can be loaded directly into a memory of an electronic computing unit (ECU), with program means for executing the first seven steps of the method according to claim 1 and the subclaims thereof when the program is executed in the computing unit (ECU).

14. Electronically readable data carrier having electronically readable control information which is stored thereon and comprises at least one computer program according to claim 13 and is so configured as to perform a method according to one of claims 1 to 12 when the data carrier is used in an electronic computing unit (ECU).

## Revendications

1. Procédé de gestion d'une opération de production pour la fabrication d'au moins un élément de construction, comprenant les stades :
- réception et mise en mémoire de données (DSG) de fabrication sur la base desquelles l'élément de construction peut-être fabriqué par une opération de production, dans un premier conteneur (CON1) de fichiers (STP1) ;
- réception et mise en mémoire de données (LIC) de production se rapportant à l'élément de construction dans le premier conteneur (CON1) de fichiers, les données (LIC) de reproduction caractérisant au moins une autorisation se rapportant à la fabrication de l'élément de construction (STP2) ;
- et les stades caractéristiques : réception et mise en mémoire de données (PRO) de production, qui caractérisent au moins un état d'au moins une machine de production pendant l'opération de production, dans un deuxième conteneur (CON2) de fichiers (STP3) ;
- réception et mise en mémoire de données (OBJ) de caractères, qui caractérisent au moins une propriété de l'élément de construction fabriqué par l'opération de production, dans un troisième conteneur (CON3) de fichiers (STP4) ;
- réception d'au moins une demande (REQ) (STP5) ;
- affectation d'un degré de détail pouvant être donné à l'avance aux données (DSG) de fabrication, qui caractérise une précision avec laquelle les données (DSG) de fabrication sont mises à disposition ;
- mise à disposition d'au moins une partie (PRT) des données (DSG) de fabrication et/ou des données (LIC) de reproduction et/ou des données (PRO) de production et/ou des données (OBJ) de caractère mises en mémoire en fonction de la demande (REQ) (STP6), les données (DSG) de fabrication étant mises à disposition sur la base du degré de détail en fonction de la demande (REQ) ; et
- fabrication d'au moins une partie de l'élément de construction par fabrication additive et/ou soustractive.

2. Procédé suivant la revendication 1,
**caractérisé en ce que**
l'on met en mémoire les données (DSG) de fabrication chiffrées par au moins une première clé (KEY1) et/ou les données (PRO) de production par au moins une deuxième clé (KEY2) et/ou les données (OBJ) de caractère par au moins une troisième clé (KEY3).

3. Procédé suivant la revendication 1 ou 2,
**caractérisé en ce que**
l'on contrôle si la demande (REQ) est autorisée à provoquer la mise à disposition au moins de la partie (PRT).

4. Procédé suivant l'une des revendications précédentes, **caractérisé en ce que**
l'on constitue le premier conteneur (CON1) de fichiers, le deuxième conteneur (CON2) de fichiers ou le deuxième conteneur (CON2) de fichiers et le troisième conteneur (CON3) de fichiers ou le troisième conteneur (CON3) de fichiers et le premier conteneur (CON1) de fichiers ou le premier conteneur (CON1) de fichiers et le deuxième conteneur (CON2) de fichiers et le troisième conteneur (CON3) de fichiers par un conteneur de fichiers commun.

5. Procédé suivant l'une des revendications précédentes, **caractérisé en ce que**
l'on met en mémoire, dans le conteneur (CON1 - CON3) de fichiers leurs appartenant respectivement, une somme de contrôle des données (DSG) de fabrication et/ou une somme de contrôle des données (PRO) de production et/ou une somme de contrôle des données (OBJ) de caractère.

6. Procédé suivant l'une des revendications précédentes, **caractérisé en ce que**
l'on met en mémoire, dans un autre conteneur de fichiers, qui lui est propre, une somme de contrôle des données (DSG) de fabrication et/ou une somme de contrôle des données (PRO) de production et/ou une somme de contrôle des données (OBJ) de caractère.

7. Procédé suivant l'une des revendications précédentes, **caractérisé en ce que**
l'on met en mémoire les conteneurs (CON1 - CON3) respectifs de fichiers dans une base de données respective ou l'on met en mémoire les conteneurs (CON1 - CON3) de fichiers dans la même base de données.

8. Procédé suivant la revendication 7,
**caractérisé en ce que**
l'on fait fonctionner au moins l'une des bases de données en registre réparti.

9. Procédé suivant l'une des revendications précédentes, **caractérisé en ce que**
les données (PRO) de production comprennent des données de configuration et/ou des mesures d'entretien et/ou des opérations de production effectuées et/ou des messages d'alerte et/ou de défaut de la machine de production.

10. Procédé suivant l'une des revendications précédentes, **caractérisé en ce que**
les données (PRO) de production comprennent le temps et/ou la durée d'au moins un stade de production de l'opération de production.

11. Procédé suivant l'une des revendications précédentes, **caractérisé en ce que**
les données (OBJ) de caractère comprennent au moins un stade de production de l'opération de production et/ou des indications du fabriquant et/ou une donnée sur le stade de production et/ou sur un emplacement du stade de production.

12. Procédé suivant l'une des revendications précédentes, **caractérisé en ce que**
l'on affecte à l'élément de construction un jeton en matériel, qui peut être identifié à l'aide des données (LIC) de reproduction.

13. Programme d'ordinateur, qui peut être chargé directement dans une mémoire d'un dispositif (ECU) informatique électronique, comprenant des moyens de programme pour exécuter les sept premiers stades de la revendication 1 et de ses sous-revendications, lorsque le programme est exécuté dans le dispositif (ECU) informatique.

14. Support de données, déchiffrables électroniquement, sur lequel sont mises en mémoire des informations de commande pouvant être déchiffrées électroniquement, qui comprennent au moins un programme d'ordinateur suivant la revendication 13 et qui sont conformés de manière à ce qu'elles effectuent, lors de l'utilisation du support de données dans un dispositif (ECU) informatique électronique, un procédé suivant l'une des revendications 1 à 12.
